# EUROPÄISCHE PATENTANMELDUNG

(11) **EP 1 202 421 A1**
(43) Veröffentlichungstag der Anmeldung: **02.05.2002**
(21) Anmeldenummer: 00810986.0
(22) Anmeldetag: 25.10.2000
(51) Int. Cl.: H02H 1/00, G06F 1/04

(54) **Schutz einer elektrischen Anlage**

(71) Anmelder: ABB Schweiz AG, 5400 Baden (CH)
(72) Erfinder: Borner, Christian, 5213 Villnachern (CH)
(74) Vertreter: ABB Patent Attorneys

(57) **Zusammenfassung**

Eine Vorrichtung (1) zum Schutz einer elektrischen Anlage weist einen Datenprozessor (2) auf, welcher mit verschiedenen Taktfrequenzen betreibbar ist. Der Datenprozessor (2) wird beim Erfassen von Messwerten in einem Normalbetrieb mit einer niedrigen Taktfrequenz betrieben, und nach einer Detektion eines Ausnahmezustandes mit einer höheren Taktfrequenz betrieben, um zu bestimmen, ob eine Betätigung eines Leistungsschalters (3) vorgenommen werden muss. Dadurch wird es möglich, den Datenprozessor (2) ohne eine Kühlung zu betreiben und somit platzsparend anzuordnen, und doch im Bedarfsfall eine notwendige Rechenleistung zur Verfügung zu haben.

In einer bevorzugten Ausführungsform der Erfindung weist die Schutzvorrichtung (1) ein Mittel zur Detektion eines Ausnahmezustandes auf, welches vorzugsweise ein auf dem Datenprozessor (2) ausführbares Programmelement zur Analyse von Messwerten ist. Dadurch ist derselbe Prozessor (2) für den Normalbetrieb wie auch für die Datenverarbeitung im Ausnahmezustand verwendbar, was einen Aufbau der Vorrichtung (1) vereinfacht.

## Beschreibung

### Technisches Gebiet

Die Erfindung bezieht sich auf das Gebiet der Schutz- und Leittechnik. Sie bezieht sich auf eine Vorrichtung und ein Verfahren zum Schutz einer elektrischen Anlage gemäss dem Oberbegriff der Patentansprüche 1 beziehungsweise 6.

### Stand der Technik

Vorrichtungen und Verfahren zum Schutz einer elektrischen Anlage, beispielsweise einer Hoch-, Mittel- oder Niederspannungsschaltanlage oder einer Übertragungsleitung, sind allgemein bekannt. Sogenannte Schutzrelais messen Spannungen und/oder Ströme einer Anlage und berechnen daraus gegebenenfalls bestimmte Kennwerte. Die Mess- oder Kennwerte werden überwacht, und beim Erfüllen vorgegebener Bedingungen wird ein Störfall oder Ausnahmezustand detektiert. Dadurch wird ein mit "Anlauf' oder "Anregung", im Englischen mit "Start" bezeichneter Vorgang zur Analyse von Messwerten ausgelöst, um eine relevante Störung von einer nur vorübergehenden oder unwesentlichen Störung zu unterscheiden, so dass keine unnötigen Abschaltungen vorgenommen werden. Wenn nötig, wird ein Leistunggsschalter betätigt. Beispielsweise wird beim Überschreiten eines Strom- oder Leistungsgrenzwertes eine Leitung oder eine Maschine von einem Netz abgetrennt oder abgeschaltet, um eine Beschädigung zu verhindern.

Bei modernen Schutzrelais geschieht die Berechnung der Kennwerte und die Überwachung mittels eines Mikroprozessors. Dabei werden extrem hohe Zuverlässigkeiten gefordert, weil eine Überwachung während Jahrzehnten in Betrieb sein muss, währenddem Störfälle nur alle paar Monate oder Jahre auftreten. Dadurch stellt sich das Problem, dass im Normalbetrieb nur wenig Daten zu verarbeiten sind, in einem Störfall jedoch eine grosse Menge von Messwerten verarbeitet werden muss, um unnötige Abschaltungen zuverlässig zu vermeiden. Ein Prozessor zur Verarbeitung dieser Menge von Messwerten muss auf eine entsprechende maximale Rechenleistung ausgelegt werden. Deshalb werden entweder Prozessoren mit hoher Rechenleistung verwendet, oder es werden mehrere Prozessoren mit niedrigerer Rechenleistung eingesetzt. Im ersten Fall bedarf ein Hochleistungsprozessor einer Kühlung, beispielsweise durch einen Kühlkörper, der aber viel Platz verbraucht. Eine aktive Kühlung durch einen Ventilator vermindert eine Zuverlässigkeit des Schutzrelais. Bei einem Ausfall des Ventilators überhitzt je nach Umgebungstemperatur der Prozessor und fällt ebenfalls aus.lm zweiten Fall führt die Verwendung mehrerer Prozessoren ebenfalls zu einem hohen Platzbedarf.

### Darstellung der Erfindung

Es ist deshalb Aufgabe der Erfindung, eine Vorrichtung und ein Verfahren zum Schutz einer elektrischen Anlage der eingangs genannten Art zu schaffen, welche die oben genannten Nachteile beheben.

Diese Aufgabe lösen eine Vorrichtung und ein Verfahren zum Schutz einer elektrischen Anlage mit den Merkmalen der Patentansprüche 1 beziehungsweise 6.

Erfindungsgemäss weist die Vorrichtung zum Schutz einer elektrischen Anlage einen Datenprozessor auf, welcher mit verschiedenen Taktfrequenzen betreibbar ist. Dabei wird der Datenprozessor beim Erfassen von Messwerten in einem Normalbetrieb mit einer niedrigeren Taktfrequenz, und nach einer Detektion eines Ausnahmezustandes mit einer höheren Taktfrequenz betrieben, um zu bestimmen, ob eine Betätigung eines Leistungsschalters vorgenommen werden muss.

Dadurch wird es möglich, den Datenprozessor ohne eine aktive Kühlung zu betreiben, und doch im Bedarfsfall eine notwendige Rechenleistung zur Verfügung zu haben. Dadurch wird die Zuverlässigkeit der Vorrichtung erhöht.

In einer bevorzugten Ausführungsform der Erfindung weist die Schutzvorrichtung ein Mittel zur Detektion eines Ausnahmezustandes auf, welches vorzugsweise ein auf dem Datenprozessor ausführbares Programmelement zur Analyse von Messwerten ist. Dadurch ist derselbe Prozessor für den Normalbetrieb wie auch für die Datenverarbeitung im Ausnahmezustand verwendbar, was den Aufbau der Vorrichtung vereinfacht.

In einer bevorzugten Variante der Erfindung wird der Datenprozessor, nachdem er während einer vorgegebenen Zeitdauer mit der höheren Taktfrequenz betrieben worden ist, wieder mit der niedrigen Taktfrequenz betrieben, um ein Überhitzen des Datenprozessors zu vermeiden.

Weitere bevorzugte Ausführungsformen gehen aus den abhängigen Patentansprüchen hervor.

### Kurze Beschreibung der Zeichnungen

Im folgenden wird die Erfindung anhand eines bevorzugten Ausführungsbeispiels, welches in den beiliegenden Zeichnungen dargestellt ist, näher erläutert. Es zeigen:
- Figur 1: schematisch eine Struktur einer erfindungsgemässen Vorrichtung; und
- Figur 2: ein Flussdiagramm eines erfindungsgemässen Verfahrens.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

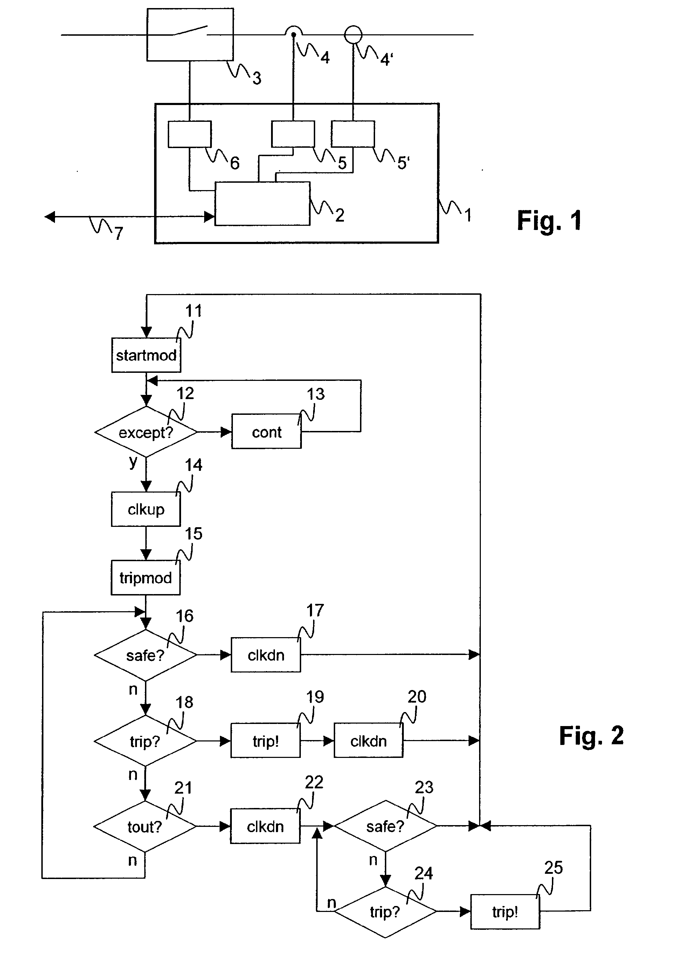

Figur 1 zeigt schematisch eine Struktur einer erfindungsgemässen Schutzvorrichtung 1 zur Betätigung eines Leistungsschalters 3. Die Schutzvorrichtung 1 weist einen Datenprozessor 2 zur Verarbeitung von Messwerten respektive Messdaten auf. Der Datenprozessor 2 ist über mindestens eine Eingabeeinheit 5,5' zur Erfassung von Messwerten mit mindestens einem Sensor 4,4' verbunden. Der Datenprozessor 2 ist mit einer Ausgabeeinheit 6 zur Ansteuerung des Leistungsschalters 3 verbunden, und weist vorzugsweise eine Kommunikationsschnittstelle 7 zur Kommunikation mit anderen Leittechnikgeräten auf.

Die Schutzvorrichtung 1 ist Teil einer elektrischen Schaltanlage oder Unterstation und dient beispielsweise dem Schutz einer elektrischen Übertragungsleitung oder eines Gerätes wie einem Motor, Generator, Transformator oder einer Sammelschiene.

Die Schutzvorrichtung 1 weist in einer bevorzugten Ausführungsform der Erfindung ein auf dem Datenprozessor 2 ausführbares erstes Programmelement oder Startmodul zur Detektion eines Störfalls oder Ausnahmezustandes und zu einer Auslösung einer Erhöhung einer Taktfrequenz des Datenprozessors 2 nach Massgabe einer Analyse der Messwerte auf. In einer anderen Ausführungsform der Erfindung weist die Schutzvorrichtung 1 einen separaten Baustein, beispielsweise einen ASIC (Application Specific Integrated Circuit), zur Detektion des Ausnahmezustandes auf.

Der Datenprozessor 2 ist ein Mikroprozessor oder Digitaler Signalprozessor. Er weist eine interne oder eine externe Clock- oder Takteinheit zur Erzeugung eines Taktsignals für den Datenprozessor 2 mit einer vorgegebenen Taktfrequenz auf. Die Takteinheit ist durch den Datenprozessor 2 und durch das auf dem Datenprozessor 2 ausgeführte Startmodul respektive durch den separaten Baustein ansteuerbar.

Die Schutzvorrichtung 1 weist ein auf dem Datenprozessor 2 ausführbares zweites Programmelement oder Tripmodul zur Bestimmung ob eine Betätigung, beispielsweise eine Öffnung des Leistungsschalters 3 zur Abtrennung einer Leitung oder einer Maschine ausgelöst werden muss, auf. Das erste und zweite Programmelement sind in der Schutzvorrichtung 1 in einem entsprechenden Speichermittel gespeichert, beispielsweise in einem EPROM (Electrically Programmable Read Only Memory).

In einer bevorzugten Ausführungsform der Erfindung weist die Schutzvorrichtung 1 ein Mittel zu einer Erniedrigung der Taktfrequenz nach einer vorgegebenen Zeitdauer nach der Erhöhung der Taktfrequenz auf.

Das erfindungsgemässe Verfahren funktioniert folgendermassen: Die Schutzvorrichtung 1 detektiert nach Massgabe einer Analyse der Messwerte den Ausnahmezustand und löst eine Erhöhung der Taktfrequenz des Datenprozessors 2 aus. Die Messwerte sind insbesondere eine oder mehrere Spannungen und/oder Ströme der Anlage. In einer bevorzugten Variante der Erfindung geschieht die Erhöhung der Taktfrequenz immer, falls ein Ausnahmezustand detektiert wird. Das heisst, dass auf den Zustand des Datenprozessors 2, insbesondere auf seine Temperatur, keine Rücksicht genommen wird. Dadurch steht mit Sicherheit eine ausreichende Rechenleistung zur weiteren Analyse der Messwerte durch das Tripmodul zur Verfügung. Da ein Ausnahmezustand sehr selten, das heisst kaum täglich auftritt, und eine Ausführungsdauer des Tripmoduls begrenzt ist, besteht keine Überhitzungsgefahr.

Die Detektion des Ausnahmezustands geschieht mit geringem Rechenaufwand, beispielsweise durch einen Vergleich eines oder mehrerer Messwerte mit vorgegebenen Schwellwerten.

Im Ausnahmezustand wird nach einem sogenannten Anlauf auf dem Datenprozessor 2 das zweite Programmelement oder Tripmodul ausgeführt. Dieses bestimmt, ob eine Betätigung des Leistungsschalters 3 ausgelöst werden muss. Dazu werden einer oder mehrere der Messwerte entsprechend der erhöhten Taktfrequenz erfasst und detailliert ausgewertet. Diese detaillierte Auswertung beinhaltet beispielsweise eine Berechnung von Leistungen und von Gradienten von Messwertverläufen. Diese berechneten Werte werden mit vorgegebenen Werten verglichen und es wird beispielsweise bestimmt, ob ein bestimmter Wert einen vorgegebenen Grenzwert während einer vorgegebenen Zeit überschreitet. Diese detaillierte Auswertung erlaubt es beispielsweise, innerhalb einer vorgegebenen Zeit einen Kurzschluss von einem Einschaltstromstoss zu unterscheiden. Im Falle einer Detektion eines Kurzschlusses wird der Leistungsschalter 3 geöffnet, andernfalls nicht. Welche Werte bei der detaillierten Auswertung in welcher Art bestimmt und wie sie miteinander logisch verknüpft werden, hängt von der Platzierung und Funktion des Leistungsschalters 3 in der Anlage ab.

Figur 2 zeigt ein Flussdiagramm des erfindungsgemässen Verfahrens: In Schritt 11 wird eine zyklische Ausführung des Startmoduls gestartet. Während der Ausführung des Startmoduls wird in einer Abfrage 12 geprüft, ob ein Ausnahmezustand vorliegt. Liegt kein Ausnahmezustand vor, ist also das Resultat der Abfrage "nein", so wird in Schritt 13 weitergefahren und die Abfrage 12 später wiederholt. Liegt ein Ausnahmezustand vor, ist also das Resultat der Abfrage "ja", wird mit Schritt 14 die Erhöhung der Taktfrequenz des Datenprozessors 2 ausgelöst und darauf mit Schritt 15 das Tripmodul gestartet. Die Ausführung des Startmoduls wird entweder gestoppt oder mit einer niedrigeren Priorität als das Tripmodul weitergeführt. In Abfrage 16 wird während der Ausführung des Tripmoduls geprüft, ob ein sicherer Zustand eingetreten ist, welche keine Betätigung des Leistungsschalters 3 erfordert. Ist das Resultat "ja", wird in Schritt 17 die Taktfrequenz erniedrigt und mit Schritt 11 weitergefahren. Ist das Resultat "nein", wird in Abfrage 18 geprüft, ob ein Trip detektiert wurde und eine Betätigung des Leistungsschalters 3 erforderlich ist. Ist das Resultat "ja", wird in Schritt 19 der Leistungsschalter 3 betätigt, in Schritt 20 die Taktfrequenz erniedrigt und mit Schritt 11 weitergefahren. Ist das Resultat "nein", wird optional in Abfrage 21 geprüft, ob eine vorgegebene Zeit abgelaufen ist. Ist das Resultat "ja", wird in Schritt 22 die Taktfrequenz erniedrigt und mit Abfrage 23 weitergefahren. Ist das Resultat "nein", wird mit Abfrage 16 weitergefahren. In Abfrage 23 wird analog zu Abfrage 16, jedoch mit der niedrigen Taktfrequenz, geprüft, ob ein sicherer Zustand eingetreten ist. Ist das Resultat "ja", wird mit Schritt 11 weitergefahren. Ist das Resultat "nein", wird in Abfrage 24 geprüft, ob ein Trip detektiert wurde. Ist das Resultat "ja", wird in Schritt 25 der Leistungsschalter 3 betätigt und mit Schritt 11 weitergefahren. Ist das Resultat "nein", wird mit der Abfrage 23 weitergefahren.

In einer bevorzugten Ausführungsform der Erfindung ist der Datenprozessor 2 mit Taktfrequenzen von 33, 66 oder 100 MHz taktbar. Ein externer Bustakt ist für alle drei internen Taktfrequenzen 33 MHz. Aus thermischen Gründen ist eine maximale dauernde Taktfrequenz des Datenprozessors 2 ohne aktive Kühlung auf eine niedrige Taktfrequenz 66 MHz beschränkt, so dass das Startmodul bei dieser Frequenz ausgeführt wird, wobei es ca. die Hälfte der Rechenzeit benötigt. Im Ausnahmezustand wird die Taktfrequenz auf eine höhere Taktfrequenz von 100 MHz erhöht. Eine typische Dauer eines Ausnahmezustandes, nach welcher entweder ein Trip ausgelöst wird oder die Bedingungen für den Ausnahmezustand nicht mehr gültig sind, beträgt 20 Millisekunden bis 500 Millisekunden.

In einer bevorzugten Variante der Erfindung wird die Taktfrequenz innerhalb einer bestimmten Zeitdauer, beispielsweise 3 bis 20 Sekunden nur eine maximale Anzahl mal erhöht, um bei einer dauernden an- und abfallenden Anregung des Ausnahmezustands einer thermischen Überlastung vorzubeugen. In einer weiteren Variante der Erfindung wird aus demselben Grund nach einer Erhöhung der Taktfrequenz diese jeweils eine vorgegebene minimale Zeitdauer auf der niedrigeren Taktfrequenz gehalten.

In einer weiteren bevorzugten Variante der Erfindung wird die Taktfrequenz nach Massgabe einer Temperatur des Datenprozessors 2 oder einer Umgebungstemperatur angepasst, beispielsweise indem die Taktfrequenz beim Erreichen einer vorgegebenen Maximaltemperatur reduziert wird.

Die erfindungsgemässe Schutzvorrichtung 1 erlaubt also einen Aufbau mit niedrigem Raumbedarf, bei dem gleichwohl bei Bedarf ausreichend Rechenleistung zur Verfügung steht und keine Gefahr der Überhitzung des Datenprozessors 2 besteht.

### Bezugszeichenliste

- 1: Schutzvorrichtung
- 2: Datenprozessor
- 3: Leistungsschalter
- 4,4': Sensor
- 5,5': Eingabeeinheit
- 6: Ausgabeeinheit
- 7: Kommunikationsschnittstelle
- 11: startmod - Starten der Ausführung des Startmoduls
- 12: except? - Abfrage ob Ausnahmezustand vorlieg
- 13: cont - Weiterfahren
- 14: clkup - Erhöhung der Taktfrequenz
- 15: tripmod - Starten der Ausführung des Tripmoduls
- 16,23: safe? - Prüfung, ob ein sicherer Zustand eingetreten ist
- 17,20,22: clkdn - Erniedrigung der Taktfrequenz
- 18,24: trip? - Prüfung, ob Trip detektiert wurde
- 19,25: trip! - Leistungsschalter betätigen
- 21: tout? - Prüfung, ob vorgegebene Zeit abgelaufen ist

## Patentansprüche

1. Schutzvorrichtung (1) zum Schutz einer elektrischen Anlage mittels eines Leistungsschalters (3), wobei die Schutzvorrichtung (1) einen Datenprozessor (2) zur Verarbeitung von Messwerten aufweist, **dadurch gekennzeichnet,**
**dass** die Schutzvorrichtung (1) ein Mittel zur Detektion eines Ausnahmezustandes und zur Erhöhung einer Taktfrequenz des Datenprozessors (2) nach Massgabe einer Analyse der Messwerte aufweist.

2. Schutzvorrichtung (1) gemäss Anspruch 1, **dadurch gekennzeichnet, dass** das Mittel zur Detektion eines Ausnahmezustandes ein auf dem Datenprozessor (2) ausführbares Programmelement ist.

3. Schutzvorrichtung (1) gemäss Anspruch 1, **dadurch gekennzeichnet, dass** die Schutzvorrichtung (1) ein auf dem Datenprozessor (2) ausführbares Programmelement zur Bestimmung, ob eine Betätigung des Leistungsschalters (3) notwendig ist, aufweist.

4. Schutzvorrichtung (1) gemäss Anspruch 1, **dadurch gekennzeichnet, dass** die Schutzvorrichtung (1) ein Mittel zu einer Erniedrigung der Taktfrequenz nach einer vorgegebenen Zeitdauer nach der Erhöhung der Taktfrequenz des Datenprozessors aufweist.

5. Schutzvorrichtung (1) gemäss Anspruch 1, **dadurch gekennzeichnet, dass** die Messwerte Spannungen und/oder Strömen der elektrischen Anlage entsprechen.

6. Verfahren zum Schutz einer elektrischen Anlage mittels eines Leistungsschalters (3), wobei die Schutzvorrichtung (1) einen Datenprozessor (2) zur Verarbeitung von Messwerten aufweist, **dadurch gekennzeichnet,**
**dass** die Schutzvorrichtung (1) nach Massgabe einer Analyse der Messwerte einen Ausnahmezustand detektiert und eine Erhöhung einer Taktfrequenz des Datenprozessors (2) auslöst.

7. Verfahren gemäss Anspruch 6, **dadurch gekennzeichnet, dass** die Erhöhung der Taktfrequenz immer geschieht, falls ein Ausnahmezustand detektiert wird.

8. Verfahren gemäss Anspruch 6, **dadurch gekennzeichnet, dass** im Ausnahmezustand bestimmt wird, ob eine Betätigung des Leistungsschalters (3) ausgelöst werden muss.
